Europäisches Patentamt

European Patent Office

Office européen des brevets

(19)

(11) Publication number: **0 026 560**

**A1**

(12) **EUROPEAN PATENT APPLICATION**

(21) Application number: **80302462.9**

(22) Date of filing: **21.07.80**

(51) Int. Cl.³: **C 22 B 9/02**
**C 22 B 19/32**

(30) Priority: **24.07.79 GB 7925796**

(43) Date of publication of application:
**08.04.81 Bulletin 81/14**

(84) Designated Contracting States:
**BE DE FR GB NL**

(71) Applicant: **ISC ALLOYS LIMITED**
**1, Redcliff Street**
**Bristol BS99 7EA(GB)**

(72) Inventor: **Kruger, Albert**
**12, Melville Road Redland**
**Bristol BS6 6PA(GB)**

(74) Representative: **Whalley, Kevin et al,**
**Marks & Clerk 57/60 Lincoln's Inn Fields**
**London WC2A 3LS(GB)**

(54) Boiler for molten metals and a method of boiling and refining a molten metal.

(57) A boiler for molten metals, especially zinc or cadmium, has a vertical perforated inner tube (1) surrounded by an outer tube (3), the annular space between the tubes being packed with a refractory lump material (2) to which molten metal is fed. The outer surface of the outer tube (3) is heated, e.g. with hot gases from a burner, and metal vapour is withdrawn from the interior of the inner tube (1), to be used for example in zinc dust or zinc oxide production.

EP 0 026 560 A1

./...

TITLE MODIFIED
sec {. .. page

– 1 –

"BOILER FOR MOLTEN METALS"

This invention relates to a boiler for molten metals, and more especially for lower-boiling metals, such as zinc or cadmium. It is especially useful for refining secondary or re-claimed metals.

It is known to use oil-fired or gas-fired reverberatory furnaces for the melting and evaporation of lower-melting metals, such as zinc or cadmium. Such furnaces are normally employed where it is required to evaporate such metals for refining or powder-making operations, and are normally operated batch-wise. Such furnaces essentially boil metal vapour from a pool of molten metal, which has disadvantages in respect of thermal and refining efficiency.

A furnace which works on electro-thermic principles is known for evaporating zinc and cadmium. Such a furnace is described in British Patent No. 1,017,283. In such a furnace, heat is generated electrically by resistance heating in inert, but electrically conductive, lump packing material, e.g. lumps of coke over which films of molten metal are caused to flow. The packing material is situated in a stationary packed column, with electrodes at the top and bottom.

However, where the molten metal fed to a furnace, as described

0026560

- 2 -

in British Patent No. 1,017,283, contains aluminium, as when feeding a scrap zinc-aluminium alloy, the aluminium tends to combine with carbon, exothermically, to form aluminium carbide which reduces the electrical efficiency of the column and eventually leads to blocking of the interstices between the lumps of packing material.

The known oil-fired or gas-fired furnaces tend to be wasteful of heat, since they are operated batch-wise and have to be heated-up and cooled-down periodically in order to remove residues from the furnace. Thus typical fuel consumption figures could be as much as 100-120 gallons (455-546 litres) fuel oil/tonne of zinc evaporated. Also such a furnace tends to leave a substantial proportion of input zinc in the residue.

U.S. Patent No. 3,637,367 describes a furnace having a column packed with material such as coke, this column being fed at the centre with molten metal by means of an inner feed-pipe which extends downwards into the packing material. This leads to inferior thermal efficiency.

It is an object of the present invention to provide a boiler suitable for continuously boiling metals of relatively low boiling-point such as zinc or cadmium from a liquid feed.

Accordingly, the present invention in one aspect provides a boiler for boiling and refining molten metals, especially zinc or cadium, comprising a vertically-disposed perforated inner tube disposed within and surrounded by an outer tube, the annular space between the inner and outer tubes being packed with refractory lump material, means for feeding molten metal continuously to the annular space, means for conducting metal vapour from the interior of the inner tube, and means for heating the outer surface of the outer tube.

Preferably molten metal is fed to the refractory packing material adjacent to the inner surface of the outer tube.

The means for feeding molten metal may be suitably in the form of a rotatable disc with associated underflow and overflow weirs to hold back metal oxides, and to provide a liquid/vapour seal.

Preferably the means for removing metal vapour is in the form of a crossover duct which communicates with the interior space of the perforated inner tube, penetrates the annular packing and passes to a condenser or oxidiser for metal vapour.

The outer tube may be suitably heated by means of a flue surrounding the outer tube and fed with hot gases produced by the combustion of a suitable fuel at the base of the flue. Alternatively, electrical-resistance heaters may be used to heat the outer tube.

Preferably the refractory lump material is inert to aluminium and its oxides and may be suitably crushed fire brick. Alternatively coke or clay - graphite may be used as the refractory lump material where there is a low aluminium content in the feed.

Preferably the outer tube is made of a highly-refractory material such as clay-graphite bonded silicon carbide.

Preferably the perforated inner tube is made of refractory material, e.g. clay-graphite bonded silicon carbide.

The boiler according to the invention has the advantage that molten metal continuously fed as a thin film or rivulets to the annular space is refined by distillation. The lower boiling metal is boiled off at the inner surface of the heated outer tube, and partially re-condensed within the packing, the vapour passing through the inner tube perforations to the interior thereof and thence to a condenser or oxidiser,e.g. for the production of liquid metal, metal dust or oxide.

The external heating flue surrounding the outer tube may also communicate with a melting pot or chamber for melting solid metal or alloy, prior to feeding it to the boiler. In this way the hot gases from the flue are utilised for both melting and evaporation of the metal concerned. If preferred, the hot waste gas from the flue can be used to pre-heat air for combustion.

The invention in another aspect provides a method of boiling and refining a molten metal, characterized by continuously feeding molten metal to an annular space between two vertically-disposed tubes, the said space being packed with refractory lump material, heating the said material by means surrounding the outer tube, and removing metal vapour flowing through perforations in the inner tube into the interior thereof.

In the method according to the invention, impure molten metal may be fed to the annular space and refined metal vapour removed from the inner tube.

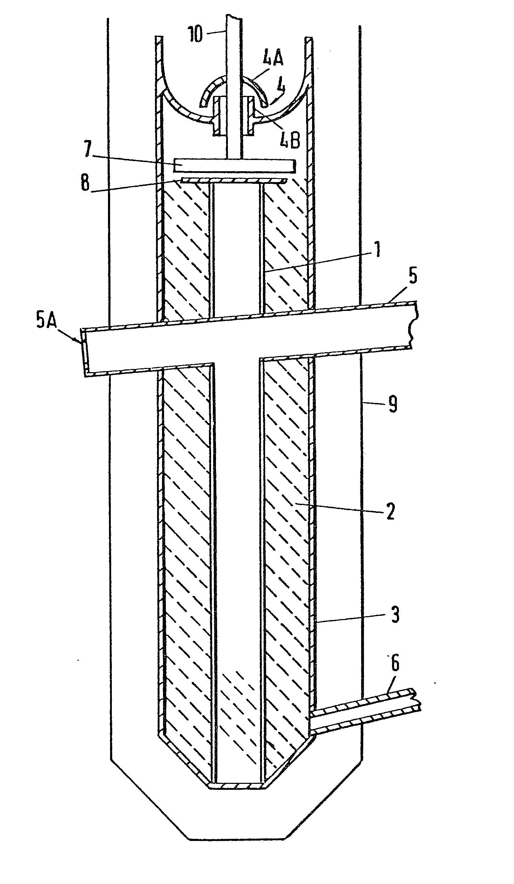

The invention will be further described, by way of example only, with reference to the accompanying drawing, which is a section through a boiler according to the invention.

The boiler shown in the drawing comprises an inner perforated tube 1, a refractory packing material 2, an outer tube 3 through which heat is supplied to the packing, a molten metal feed distributor 4, a metal vapour offtake 5, an offtake clean-out point 5A, and an offtake 6 for any residual liquid metal. A distributor disc 7 is provided to allow molten metal to be fed to the packing in a ring-like pattern. A splash cover 8 is provided at the top of the inner tube 1.

An outer flue 9 generally concentric with the outer tube 3 is mounted externally of the tube 3 and conducts hot gases around the outer tube in a generally helical path from a burner (not shown) situated at the bottom of the flue.

In operation, molten metal containing for example zinc is fed into the dished container of the feed distributor 4. A centre shaft 10 of the distributor is rotated at a slow rate (e.g. 1 revolution/minute) and molten zinc feeds via underflow and overflow weirs 4A, 4B through the annular space between the shaft 10 and the overflow weir 4B. From here it impinges on the distributor disc 7 and flows outwardly until it reaches the edge of the disc which is designed to project the metal to the inner surface of the outer tube 3. Thus the molten zinc flows onto the packing material 2 adjacent the inner surface of the outer tube 3 in a ring-like pattern at the top of the annular column formed by the packing material. Zinc in the metal flowing downwardly adjacent to the inner surface of the outer tube 3 is evaporated and the vapour is to some extent refined and passes via the packing material through the perforations in the tube 1 to the interior thereof and is conducted via a crossover duct comprising the offtake 5 to a suitable condenser, e.g. to form zinc dust.

Residual metal (if any) from the column is run off via the offtake 6, and may be recycled, or sold commercially.

In this way the column may be continuously fed with molten metal containing zinc with continuous production of zinc vapour and run-off of residual metal from the bottom of the column. Because of the refluxing of distillate on the ceramic packing, the zinc vapour produced is more refined than that produced by conventional boilers operating on a feed of secondary metal.

As shown in the drawing, some coke or other refractory material is provided at the bottom of the inner tube 1 in order to moderate any reaction at the bottom of the tube 1 between aluminium and zinc oxide.

Because of the continuous feed of molten metal, thermal efficiency is improved and fuel consumption may be as low as a third of that of a conventional batch-operated oil-fired boiler.

The vapour produced at the outer ring wall of the annulus has to pass through the packing in the annulus across which there is a temperature gradient. Since the boiling point of zinc from a metal solution containing a considerable fraction of impurities such as aluminium, iron and lead is considerably higher than that of a pure zinc solution, the vapour at the internal surface of the outer tube contains relatively high proportions of the higher boiling point metals, mainly lead and aluminium. As the vapour flows through the annular packing, a fraction of the zinc containing these higher boiling point impurities condenses on the cooler packing material. Vapour entering the inner tube thus contains only small quanitites of higher boiling point impurities.

As the zinc solution flows vertically down the column it becomes enriched in impurities and the boiling point of the metal increases. Thus it is an advantage to fire from the bottom upwards, creating a vertical temperature gradient.

Because of the higher impurity level of the zinc solution at the bottom of the column the vapour entering the inner tube at the bottom will contain a higher level of impurities than that boiled at the top of the column. The vertical temperature gradient ensures that the higher boiling point metals condense out as vapour rises through the inner tube.

Further refining can be provided for by ensuring that a section of the column protrudes above the outer flue; such a protruded section may be known as a reflux zone in which final removal of the higher boiling point metals can be made. The degree of refining depends upon the surface area above the outer flue and the extent of lagging or, if preferred, direct heating of this section.

The annular configuration of the boiler causes vapour to be removed, _via_ the annular packing, to the inner tube where it can flow freely to the top of the column, thus reducing back pressure at the boiling surface, with a consequent improvement in distillation rate. Alternatively a reflux unit or condenser can be placed, externally, in the tube carrying vapour to the condenser or oxidiser.

The invention will now be further illustrated with reference to the following Examples describing the refining of de-ironed hard zinc (or galvanisers bottom dross) as in Example 1 and reclaimed zinc-based scrap containing a substantial proportion of aluminium as in Example 2. In the Examples, all percentages are by weight, and ND indicates not detected.

Example 1

De-ironed hard zinc, having the feed composition specified below, was melted and fed, in molten form, to an annular boiler as described above. The feed rate was 2.5 tonnes/24 hours and the oil consumption rate was 45 gallons (205 litres) fuel oil per tonne of zinc evaporated.

|  | Al% | Mg% | Cu% | Fe% | Pb% | Sn% | Cd% | Si% |
|---|---|---|---|---|---|---|---|---|
| Feed | 1.0 | 0.01 | 0.4 | 0.04 | 0.6 | 0.025 | 0.006 | Trace |
| Condensate | <0.001 | ND | 0.001 | <0.001 | 0.04 | <0.001 | 0.006 | ND |
| Run Off | 14.0 | 0.03 | 4.0 | 0.08 | 4.0 | 0.13 | <0.001 | Heavy |

Example 2

Zinc-based scrap alloy containing about 20% aluminium, having the feed composition specified below, was melted and fed, in molten form, to an annular boiler as described above. The feed rate was 2.49 tonnes/24 hours and the oil consumption rate was 52 gallons (237 litres) fuel oil per tonne of zinc evaporated. This includes heat required for melting the scrap alloy.

|            | Al%  | Mg%   | Cu%     | Fe% | Pb%   | Sn%     | Cd%   | Si%  |
|------------|------|-------|---------|-----|-------|---------|-------|------|
| Feed       | 20.0 | 2.05  | 0.02    | 0.3 | 4.0   | 0.25    | 0.002 | 1.7  |
| Condensate | 0.02 | 0.002 | 0.025   | ND  | 0.003 | <0.005  | ND    | 0.25 |
| Run Off    | 65.0 | 0.10  | <0.001  | 2.0 | 10.0  | 0.50    | 0.002 | 4.3  |

As can be seen the boiler acts as a refining column for evaporating relatively pure zinc vapour from a feed containing considerable proportions of impurity metals.

0026560

- 1 -

<u>CLAIMS:</u>

1.    A boiler for boiling and refining molten metals, characterized by comprising a vertically-disposed perforated inner tube (1) disposed within and surrounded by an outer tube (3), the annular space between the inner and outer tubes being packed with refractory lump material (2), means (4) for feeding molten metal continuously to the said annular space, means (5) for conducting metal vapour from the interior of the inner tube, and means (9) for heating the outer surface of the outer tube.

2.    A boiler as claimed in claim 1, characterized in that the said means for feeding molten metal is arranged to feed molten metal to the packing material adjacent the inner surface of the outer tube.

3.    A boiler as claimed in claim 1 or 2, characterized in that the said means for feeding molten metal is in the form of a rotatable disc (7) with associated underflow and overflow weirs (4A, 4B) to hold back metal oxides, and to form a liquid/vapour seal.

4.    A boiler as claimed in any of claims 1 to 3, characterized in that the said metal vapour removal means is in the form of a cross-over duct which communicates with the interior space of the inner tube, penetrates the annular packing and passes to a condenser or oxidiser for metal vapour.

5.    A boiler as claimed in any of claims 1 to 4, characterized in that the said means for heating the outer tube comprises a flue (9) surrounding the outer tube and fed with hot gases produced by combustion of fuel at the base of the flue.

6.    A boiler as claimed in any of claims 1 to 4, characterized in that the said means for heating the outer tube comprises electrical resistance heaters.

7.   A boiler as claimed in any of claims 1 to 6, characterized in that the refractory lump material is inert to aluminium.

8.   A boiler as claimed in claim 7, characterized in that the refractory lump material is crushed fire-brick.

9.   A method of boiling and refining a molten metal, characterized by continuously feeding molten metal to an annular space between two vertically-disposed tubes (1, 3), the said space being packed with refractory lump material (2), heating the said material by means (9) surrounding the outer tube (3), and removing metal vapour flowing through perforations in the inner tube (1) into the interior thereof.

10.  A method as claimed in claim 9, characterized in that impure molten metal is fed to the annular space and refined metal vapour is removed from the inner tube.

0026560

**European Patent Office**

**EUROPEAN SEARCH REPORT**

Application number

EP 80 30 2462.9

## DOCUMENTS CONSIDERED TO BE RELEVANT

| Category | Citation of document with indication, where appropriate, of relevant passages | Relevant to claim |
|---|---|---|
| | US - A - 4 027 861 (V.S. CHEREDNICHENKO et al.) <br> * fig. 2 * <br> -- | 1 |
| D,A | US - A - 3 637 367 (N. LOWICKI) <br> -- | |
| D,A | GB - A - 1 017 283 (IMPERIAL SMELTING) <br> -- | |
| A | GB - A - 1 036 379 (IMPERIAL SMELTING) <br> -- | |
| A | GB - A - 1 099 288 (IMPERIAL SMELTING) <br> -- | |
| A | US - A - 2 433 615 (G.T. MAHLER) <br> -- | |
| A | US - A - 2 670 196 (F.G. BREYER et al.) <br> -- | |
| A | DE - C - 808 286 (VEREINIGTE LEICHT-METALL-WERKE) <br> -- | |
| A | DE - B - 1 210 193 (L. STEWART) <br> ---- | |

**CLASSIFICATION OF THE APPLICATION (Int. Cl.3)**

C 22 B  9/02
C 22 B 19/32

**TECHNICAL FIELDS SEARCHED (Int.Cl.3)**

C 22 B  9/02
C 22 B 19/32

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 17-12-1980 | SUTOR |

EPO Form 1503.1  06.78